# EUROPEAN PATENT SPECIFICATION

(11) **EP 2 151 832 B1**
(45) Date of publication and mention of the grant of the patent: **18.10.2017**
(21) Application number: 08751836.1
(22) Date of filing: 11.04.2008
(51) Int. Cl.: H01C 7/02, H01C 17/065, H01B 13/00, C09D 11/02, H01B 1/24, H05B 3/14, C09D 11/108

(54) **PROCESS FOR PRODUCING PTC INK COMPOSITION AND PTC INK COMPOSITION**
PROZESS ZUM HERSTELLEN EINER PTC-TINTENZUSAMMENSETZUNG UND PTC-TINTENZUSAMMENSETZUNG
PROCÉDÉ DE FABRICATION D'UNE COMPOSITION D'ENCRE PTC ET COMPOSITION D'ENCRE PTC

(30) Priority: 11.05.2007 JP 2007126563
(43) Date of publication of application: 10.02.2010
(73) Proprietor: NOK Corporation, Tokyo 105-8585 (JP)
(72) Inventor: YAMADA, Naoki, Fujisawa-shi Kanagawa 251-0042 (JP)
(74) Representative: Gulde & Partner
(86) International application number: PCT/JP2008/057210
(87) International publication number: WO 2008/139806

(56) References cited:
- EP-A1- 0 460 790
- WO-A1-02/080200
- GB-A- 1 604 735
- JP-A- 2002 146 251
- JP-A- 2002 146 251
- JP-A- 2004 143 354
- JP-A- 2004 143 354
- JP-A- 2006 169 367
- JP-A- 2006 169 367

## Description

### Technical Field

The present invention relates to a method for producing a PTC ink composition, and the PTC ink composition. More specifically, the present invention relates to a method for producing a PTC ink composition, and the PTC ink composition, which are capable of continuously forming a satisfactory continuous coating, excellent in production efficiency, and suitable for industrial use.

### Background Art

Among various matrices proposed for use in PTC ink materials, generally ethylene-vinyl acetate copolymers are widely used. In order to make such copolymers usable as ink, copolymers having low crystallinity and a large content of vinyl acetate that is soluble in a solvent are currently used.

The use of such copolymers with low crystallinity, however, degrades the PTC characteristics and over-temperature protection function.

PTC materials comprising conductive particles and ethylene-acrylic acid copolymers (EAA) with high crystallinity, i.e., EAA having a low acrylic acid content, have been molded by heat-press before use, as described in Patent Documents 1 to 4, and used in over-temperature protection switches, PTC heaters, and the like.

The present applicant previously proposed in Patent Document 5 a technique to apply a PTC material comprising conductive particles and EAA having a low acrylic acid content to an ink composition.

The invention of Patent Document 5, which relates to a PTC ink composition, has realized the production of ink, enabling the formation of thin films in terms of function, ensuring excellent stability in terms of quality, and achieving reduced manufacturing costs.

However, the processability when forming a coating with ink is not sufficient. As a result of various studies, Patent Document 6 has improved the processability by adding a non-polar rubber to the ink composition.

Further, Patent Document 7 has enhanced the printing processability (processability and mass productivity) by adding a polar rubber instead of a non-polar rubber, in order to improve the mass productivity.
Patent Document 1: Japanese Unexamined Patent Publication No. S54-16697: PTC material using crystalline polymer
Patent Document 2: Japanese Unexamined Patent Publication No. S55-78405: PTC material using crystalline polymer
Patent Document 3: Japanese Unexamined Patent Publication No. S55-159587: PTC material using EAA
Patent Document 4: Japanese Unexamined Patent Publication No. S55-160006: PTC material using EAA
Patent Document 5: Japanese Unexamined Patent Publication No. 2002-146251
Patent Document 6: Japanese Unexamined Patent Publication No. 2004-143354
Patent Document 7: Japanese Unexamined Patent Publication No. 2006-169367

### Disclosure of the Invention

### Problems to be Solved by the Invention

The present inventors thereafter continued research and found a new problem.

That is, the present inventors found that the addition of a polar rubber solution, rather than a non-polar rubber solution, is important to improve the mass productivity (Patent Document 7); however, the use of a polar rubber solution increases the strength of the rubber portion, and hence, the degree of deformation (curving, warping, curling, etc.) of printed matters after ink drying should be improved.

As a result of extensive research to solve this problem, the present inventors arrived at the present invention.

Accordingly, an object of the invention is to provide a method for producing a PTC ink composition, which can control the degree of deformation (curving, warping, curling, etc.) of dried ink after printing while maintaining mass productivity, and to provide the PTC ink composition.

Other objects of the invention will become apparent from the following description.

### Means for Solving the Problems

The above-described object is achieved by the inventions set forth below.

The invention as defined in claim 1 is a method for producing a PTC ink composition, the method comprising:
adding a non-polar rubber solution prepared by dissolving a non-polar rubber in a non-polar solvent selected from aliphatic hydrocarbons, aromatic hydrocarbons, and mixtures thereof, to a conductive particle-containing PTC (Positive Temperature Coefficient) ink composition obtained by dissolving under heat an ethylene-acrylic acid copolymer (EAA) having an acrylic acid content of 20 wt.% or less in decalin, tetralin, or a mixture thereof; and
adding a polar solvent to the resulting mixture.

Preferably, the non-polar rubber is butyl rubber (IIR) or ethylene-propylene rubber (EPDM).

The method for producing a PTC ink composition according to claim 1 is characterized in that the polar solvent is at least one or a mixture of two or more solvents selected from ketones, glycol ethers, glycol esters, and esters.

The invention further refers to a PTC ink composition obtained by the before mentioned method.

The invention further refers to a PTC material obtained by forming the before mentioned PTC ink composition into a material having a thickness of 1 µm to 100 µm.

The invention further refers to a planar heating element comprising the before mentioned PTC material.

### Effects of the Invention

The invention provides the following effects: ink is smoothly transferred onto a substrate during printing; a printed coating is obtained in the form of a continuous coating; printing can be performed at the same rate as general printing; and printing can be continuously performed to achieve excellent printing processability (mass productivity and processability), and enable the production efficiency to increase.

Further, in addition to providing excellent mass productivity, the invention can minimize the degree of deformation (curving, warping, curling, etc.) of printed matters after printing and drying. Therefore, the printing quality can be improved, and printing costs can be reduced.

Moreover, the invention is excellent in printing processability (mass productivity and processability), and can also control the degree of deformation of dried ink after printing; therefore, the ease of handling in the subsequent process can be improved.

### Best Mode for Carrying Out the Invention

Embodiments of the invention are described below.

The ethylene acrylic-acid copolymer (EAA) usable as a matrix in the invention preferably has high crystallinity for prominent PTC characteristics, although the crystallinity is reduced by copolymerizing acrylic acid with ethylene. Meanwhile, copolymerization of acrylic acid is essential for the bond strength and resistance variation during energization. In view of this, EAA used in the invention has an acrylic acid content of 20 wt.% or less, and preferably 2 to 10 wt.%.

Decalin, tetralin, or a mixture thereof is used as a solvent for dissolving EAA.

When EAA is dissolved in a solvent, the proportion of EAA to the solvent is such that the EAA concentration is 5 to 20 wt.%.

The concentration of the solution is adjusted within this range by heating the solution to about 50 to 150°C, and preferably 70 to 140°C.

Conductive particles selected from carbon black, graphite, metal particles, etc., are added to the obtained EAA solution.

Preferable for use as carbon black are GPF, SRF, FT, etc., which have a relatively large particle diameter and a small structure.

Examples of metal particles include single particles of copper, nickel, zinc, brass, gold, silver, etc.; mixtures of copper, nickel, zinc, brass, etc.; and particles in which the surface of these metals is treated.

In the invention, carbon black, graphite, metal particles, etc., may be used singly or in a combination of two or more, as conductive particles.

The amount of conductive particles added is preferably such that the ratio calculated by the formula: (the weight of conductive particles) / (the weight of conductive particles + the weight of EAA) x 100 is in the range of 5 to 80 wt.%.

Conductive particles are dispersed in the EAA solution using a wet-type disperser such as a three-roll mill, ball mill, bead mill, jet mill, homogenizer, Dispax, planetary mixer, anchor mixer, or the like.

A conductive particle-containing PTC ink composition is thus obtained. In the invention, a non-polar rubber solution is added to the obtained conductive particle-containing PTC ink composition.

The invention is characterized in that the rubber solution added to the conductive particle-containing PTC ink composition is a non-polar rubber solution prepared by dissolving a non-polar rubber in an aliphatic hydrocarbon, aromatic hydrocarbon, or mixture thereof.

Examples of non-polar rubbers include butyl rubber (IIR), ethylene-propylene rubber (EPDM), and the like.

Examples of aliphatic hydrocarbons for dissolving a rubber include hexane, heptane, rubber solvent, mineral spirits, etc.; and examples of aromatic hydrocarbons include cyclohexane, toluene, xylene, solvent naphtha, dipentene, etc.

These aliphatic hydrocarbons and aromatic hydrocarbons may be used singly or as a mixture in consideration of the boiling point and vapor pressure depending on the printing method.

In the invention, the concentration of the rubber in the non-polar rubber solution is preferably 2 to 40 wt.%, and more preferably 5 to 20 wt.%. The term "rubber concentration" as used herein is the concentration determined by the formula: rubber weight / (rubber weight + EAA weight) X 100.

After the non-polar rubber solution is added to the conductive particle-containing PTC ink composition (PTC dispersion), the mixture is homogenized using a stirrer such as a disperser, butterfly mixer, gate mixer, planetary mixer, anchor mixer, or the like.

The non-polar rubber solution may be added to the composition and homogenized by stirring after the addition of the EAA solution and conductive particles described above. Alternatively, the non-polar rubber solution may be added before dispersion, and the EAA solution, conductive particles, and non-polar rubber solution may be dispersed at once.

The invention is characterized in that a polar solvent is further added to the conductive particle-containing PTC ink composition after the addition of a non-polar rubber solution.

The polar solvents include ketones, glycol ethers, glycol esters, and esters. These may be used singly or in a combination of two or more in consideration of the boiling point and vapor pressure depending on the printing method, and are added to the solvent in which the rubber is dissolved, in a ratio (weight ratio) of 98:2 to 70:30, and preferably 95:5 to 85:15.

Examples of ketones include acetone, methyl ethyl ketone, acetylacetone, acetoacetic acid ester, etc.; examples of glycol ethers include ethylene glycol monomethyl ether, ethylene glycol monoethyl ether, ethylene glycol monobutyl ether, diethylene glycol monomethyl ether, diethylene glycol monoethyl ether, etc.; examples of glycol esters include ethylene glycol monomethyl ether acetate, propylene glycol monomethyl ether acetate, diethylene glycol monobutyl ether acetate, diethylene glycol monoethyl ether acetate, etc.; and examples of esters include acetic acid methyl ester, acetic acid ethyl ester, etc.

After the polar solvent is added to the solution obtained by adding the non-polar rubber solution to the PTC dispersion, the mixture is homogenized using a stirrer such as a disperser, butterfly mixer, gate mixer, planetary mixer, anchor mixer, or the like.

The polar solvent must be added with care. This is because, if the addition rate is too high, solvent shock will occur, which promotes separation and gelation to reduce the viscosity; as a result, the viscosity will not reach the desired level, resulting in poor printing processability. A jig such as an intravenous drip is preferably employed for the addition of the polar solvent. Milder conditions are better for stirring; the polar solvent and the solution obtained by adding the non-polar rubber solution to the PTC dispersion may be stirred until they appear to be mixed. More specifically, the peripheral speed suitable for stirring is in the range of 30 m/min. to 300 m/min.

The thus-obtained PTC ink composition preferably has a viscosity of about 1 to 1000 Pa·s, and can be applied on a substrate of a resin, metal, ceramic, glass, or the like, using a screen-printing method, metal mask printing method, gravure coater, or knife coater.

A non-polar rubber solution, which is prepared by dissolving a non-polar rubber in a non-polar solvent of an aliphatic hydrocarbon, aromatic hydrocarbon, or mixture thereof, is added to a conductive particle-containing PTC ink composition, which is obtained by dissolving EAA having an acrylic acid content of 20 wt.% or less in decalin, tetralin, or a mixture thereof under heat at a temperature of about 50 to 150°C. A polar solvent is subsequently added to the resulting mixture. This ensures excellent mass productivity without the addition of a polar rubber solution, as well as reducing the degree of deformation of printed matters after printing and drying.

In the invention, the PTC ink composition is applicable as a PTC material after a coating of the composition having a thickness of preferably 1 µm to 100 µm, and more preferably 10 µm to 70 µm, is formed on a substrate.

Moreover, in the invention, an electrode can be mounted to the above PTC material, thereby providing a planar heating element.

### EXAMPLES

The examples of the invention are described below; however, the invention is not limited thereto.

### Example 1

Ethylene-acrylic acid copolymer (EAA) ("Escor 5000; acrylic acid content: 6 wt.%" manufactured by ExxonMobil Chemical): 100 parts by weight
Decalin (manufactured by Kanto Chemical Co., Inc.): 600 parts by weight
Carbon black (CB) (SRF: "HTC#S" manufactured by Shin-Nikka Carbon): 60 parts by weight

EAA shown above was dissolved in decalin at a liquid temperature of 80°C placed in a container. After the mixture was cooled, CB was added thereto and dispersed using a three-roll mill, thus preparing a conductive particle-containing PTC ink composition.

A rubber solution prepared by dissolving EPDM in an aromatic hydrocarbon was added to the composition and stirred using Dispax (a disperser manufactured by IKA). Glycol ether was further added by drips and stirred with a gate mixer, thus obtaining a PTC ink composition.

The amount of each component added is shown in Table 1.

### Comparative Example 1 (Japanese Unexamined Patent Publication No. 2004-143354)

A non-polar rubber solution prepared by dissolving EPDM in an aromatic hydrocarbon was added to a conductive particle-containing PTC ink composition produced in the same manner as in Example 1, and stirred using Dispax (a disperser manufactured by IKA), thus obtaining a PTC ink composition.

The amount of each component added is shown in Table 1.

### Comparative Example 2 (Japanese Unexamined Patent Publication No. 2006-169367)

A polar rubber solution prepared by dissolving ACM in glycol ether was added to a conductive particle-containing PTC ink composition produced in the same manner as in Example 1, and stirred using Dispax (a disperser manufactured by IKA), thus obtaining a PTC ink composition.

The amount of each component added is shown in Table 1.

**[Table 1]**

| | Ex. 1 | Comp. Ex. 1 | Comp. Ex. 2 |
|---|---|---|---|
| EAA | 100 | ← | ← |
| Decalin | 600 | ← | ← |
| CB | 60 | ← | ← |
| ACM | 0 | 0 | 20 |
| EPDM | 20 | 20 | 0 |
| Glycol ether | 25 | 0 | 250 |
| Ketone | 0 | 0 | 0 |
| Aromatic hydrocarbon | 250 | 250 | 0 |

(The figures are given in parts by weight.)

### <Evaluation>

### Evaluation 1

Using the PTC ink compositions prepared in Example 1 and Comparative Examples 1 and 2, the separation of the ink and solvent, transfer of the ink to the printing object, and formation of a continuous coating were evaluated at predetermined print rates in metal mask printing, in accordance with the following criteria.

The results are shown in Table 2.

### (Evaluation Criteria)

### Separation of Ink and Solvent

A: No blur around print
B: Blur, but clear edge
C: Blur and collapsed edge

### Transfer of Ink to Printing Object

A: Transferred
B: Not entirely transferred
C: Not transferred due to slipping

### Formation of Continuous Coating

A: A continuous coating was formed.
B: A continuous coating was partially formed.
C: A continuous coating was not formed.

**[Table 2]**

| Printing rate (mms) | Ex. 1 | | | Comp. Ex. 1 | | | Comp. Ex. 2 | | |
|---|---|---|---|---|---|---|---|---|---|
| | Separation | Transfer | Coating | Separation | Transfer | Coating | Separation | Transfer | Coating |
| 5 | A | A | A | A | A | A | A | A | A |
| 15 | A | A | A | A | A | A | A | A | A |
| 30 | A | A | A | A | A | A | A | A | A |
| 60 | A | A | A | A | A | A | A | A | A |
| 90 | A | A | A | A | A | A | A | A | A |
| 120 | A | A | A | A | A | A | A | A | A |

Table 2 shows that printing characteristics were sufficient in Example 1 and Comparative Examples 1 and 2.

### Evaluation 2

Next, the number of times of printing, blur, falling of the edge, and the generation of stripes were observed, and the results are shown in Table 3. In the table, "A" denotes good, "B" denotes a small amount of generation, and "C" denotes a large amount of generation, and thus, defective.

**[Table 3]**

| The number of times of printing | Ex. 1 | | | Comp. Ex. 1 | | | Comp. Ex. 2 | | |
|---|---|---|---|---|---|---|---|---|---|
| | Blur | Falling of edge | Generation of stripes | Blur | Falling of edge | Generation of stripes | Blur | Falling of edge | Generation of stripes |
| 1-20 | A | A | A | A | A | A | A | A | A |
| 21-40 | A | A | A | A | A | A | A | A | A |
| 41-60 | A | A | A | C | B | A | A | A | A |
| 61-80 | A | A | A | C | C | C | A | A | A |
| 81-100 | A | A | A | C | C | C | A | A | A |

Table 3 reveals that sufficient continuous printing was possible in Example 1 and Comparative Example 2.

It is also seen that continuous printing was difficult in Comparative Example 1.

### Evaluation 3

Subsequently, the deformation of the printed matter was evaluated by measuring the presence of deformation and floating of the edge caused by the deformation. The floating of the edge was measured by measuring the height of the floated edge of a specimen (200 mm X 100 mm) on the shorter side (100 mm). The results are shown in Table 4.

Evaluation criteria for the deformation of the printed matter in Table 4 are as follows:
A: No deformation of printed matter
B: Slight deformation of printed matter
C: Severe deformation of printed matter

**[Table 4]**

| | Ex. 1 | Comp. Ex. 1 | Comp. Ex. 2 |
|---|---|---|---|
| Deformation of printed matter (curving, warping, curling, etc.) | A | A | B-C |
| Floating of edge | 2 mm | 2 mm | Unmeasurable |

Table 4 demonstrates that in Comparative Example 2, heavy curling, which exceeded the level of floating, occurred after drying, indicating that the efficiency in the subsequent process is poor.

It is seen that since the invention enables continuous printing and resolves the problem of curling after drying, the production efficiency is excellent and the efficiency in the subsequent process is good (consequently, printing costs can be reduced).

## Claims

1. A method for producing a PTC ink composition, the method comprising:
adding a non-polar rubber solution prepared by dissolving a non-polar rubber in a non-polar solvent selected from aliphatic hydrocarbons, aromatic hydrocarbons, and mixtures thereof, to a conductive particle-containing PTC (Positive Temperature Coefficient) ink composition obtained by dissolving under heat an ethylene-acrylic acid copolymer (EAA) having an acrylic acid content of 20 wt.% or less in decalin, tetralin, or a mixture thereof; **characterized in that** adding a polar solvent to the resulting mixture, wherein the polar solvent is at least one or a mixture of two or more solvents selected from ketones, glycol ethers, glycol esters, and esters.

2. The method for producing a PTC ink composition according to claim 1, wherein the non-polar rubber is butyl rubber (IIR) or ethylene-propylene rubber (EPDM).

3. A PTC ink composition obtained by the method according to claim 1 or 2.

4. A PTC material obtained by forming the PTC ink composition according to claim 3 into a material having a thickness of 1 µm to 100 µm.

5. A planar heating element comprising the PTC material according to claim 4.

## Patentansprüche

1. Verfahren zum Herstellen einer PTC-Tintenzusammensetzung, wobei das Verfahren umfasst:
Zugeben einer unpolaren Kautschuklösung, die durch Lösen eines unpolaren Kautschuks in einem unpolaren Lösungsmittel, ausgewählt aus aliphatischen Kohlenwasserstoffen, aromatischen Kohlenwasserstoffen und Gemischen beider, hergestellt wird, zu einer leitfähigen partikelhaltigen PTC-Tintenzusammensetzung (PTC - positiver Temperaturkoeffizient), die durch Lösen unter Wärmeeinwirkung eines Ethylen-Acrylsäure-Copolymers (EAA - *ethylene-acrylic acid*) mit einem Acrylsäuregehalt von 20 Gew.% oder weniger in Decalin oder Tetralin oder einem Gemisch beider gewonnen wird;
**gekennzeichnet durch**
Zugeben eines polaren Lösungsmittels zu dem entstandenen Gemisch,
wobei das polare Lösungsmittel mindestens ein Lösungsmittel oder ein Gemisch aus zwei oder mehr Lösungsmitteln, ausgewählt aus Ketonen, Glycolethern, Glycolestern und Estern, ist.

2. Verfahren zum Herstellen einer PTC-Tintenzusammensetzung nach Anspruch 1, wobei der unpolare Kautschuk Butylkautschuk (IIR) oder Ethylen-Propylen-Kautschuk (EPDM) ist.

3. PTC-Tintenzusammensetzung, die durch das Verfahren nach Anspruch 1 oder 2 gewonnen wird.

4. PTC-Material, das durch Formen der PTC-Tintenzusammensetzung nach Anspruch 3 zu einem Material mit einer Dicke von 1 µm bis 100 µm gewonnen wird.

5. Flächenheizelement, umfassend das PTC-Material nach Anspruch 4.

## Revendications

1. Procédé de fabrication d'une composition d'encre PTC, le procédé comprenant:
l'addition d'une solution d'un caoutchouc non polaire préparée par dissolution d'un caoutchouc non polaire dans un solvant non polaire sélectionné parmi des hydrocarbures aliphatiques, des hydrocarbures aromatiques et des mélanges de ceux-ci à une composition d'encre PTC (PTC - coefficient de température positif) contenant des particules conductrices obtenue par dissolution à chaud d'un copolymère éthylène-acide acrylique (EAA) dont la teneur en acide acrylique est de 20 % en poids ou moins dans la décaline, la tétraline ou un mélange de celles-ci;
caractérisé en ce qui suit:
l'addition d'un solvant polaire au mélange obtenu,
où le solvant polaire est un au moins ou un mélange de deux ou plusieurs solvants sélectionnés parmi des cétones, éthers de glycol, esters de glycol et esters.

2. Procédé de fabrication d'une composition d'encre PTC selon la revendication 1, où le caoutchouc non polaire est un caoutchouc butylique (IIR) ou un caoutchouc éthylène-propylène (EPDM).

3. Composition d'encre PTC obtenue par le procédé selon la revendication 1 ou 2.

4. Matériau PTC obtenu par formage de la composition d'encre PTC selon la revendication 3 en un matériau dont l'épaisseur va de 1 µm à 100 µm.

5. Élément chauffant plan comprenant le matériau PTC selon la revendication 4.
